(19) Europäisches Patentamt
European Patent Office
Office européen des brevets

(11) **EP 2 639 280 A1**

(12) **EUROPEAN PATENT APPLICATION**

(43) Date of publication:
**18.09.2013 Bulletin 2013/38**

(51) Int Cl.:
*C09J 153/02* (2006.01)    *C08J 5/18* (2006.01)
*C09J 7/02* (2006.01)

(21) Application number: **13159391.5**

(22) Date of filing: **15.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.03.2012 JP 2012060664
16.03.2012 JP 2012060665
09.08.2012 JP 2012177534
09.08.2012 JP 2012177535
12.09.2012 JP 2012200907**

(71) Applicant: **NITTO DENKO CORPORATION
Ibaraki-shi, Osaka 567-8680 (JP)**

(72) Inventors:
• **Nakayama, Naoki
Ibaraki-shi, Osaka 567-8680 (JP)**
• **Nishiyama, Naoyuki
Ibaraki-shi, Osaka 567-8680 (JP)**
• **Okada, Yoshihiro
Ibaraki-shi, Osaka 567-8680 (JP)**
• **Wada, Shouhei
Ibaraki-shi, Osaka 567-8680 (JP)**

(74) Representative: **Grünecker, Kinkeldey,
Stockmair & Schwanhäusser
Leopoldstrasse 4
80802 München (DE)**

(54) **Double-faced pressure-sensitive adhesive sheet**

(57)    The present invention provides a double-faced pressure-sensitive adhesive sheet comprising a foam substrate, pressure-sensitive adhesive layers provided on a first face and a second face of the foam substrate, and having an overall thickness t of 400 $\mu$m or smaller. At least one of the pressure-sensitive adhesive layers is constituted with a rubber-based pressure-sensitive adhesive comprising, as a base polymer, a block copolymer of a mono-vinyl-substituted aromatic compound and a conjugated diene compound.

Fig. 1

EP 2 639 280 A1

**Description**

BACKGROUND OF THE INVENTION

1. Field of the Invention

The present invention relates to a double-faced pressure-sensitive adhesive sheet comprising a foam substrate.
The present application claims priority based on Japanese Patent Application Nos. 2012-060664 and 2012-060665 filed on March 16th, 2012, Japanese Patent Application Nos. 2012-177534 and 2012-17753 filed on August 9th, 2012, and Japanese Patent Application No. 2012-200907 filed on September 12th, 2012, and the entire contents of these applications are incorporated herein by reference.

2. Description of the Related Art

In general, pressure-sensitive adhesive (PSA) exists as a soft solid (a viscoelastic material) in a room temperature range and has a property to adhere easily to an adherend with some pressure applied. Taking advantage of such properties, in a form of, for example, a substrate-backed double-faced PSA sheet comprising a substrate and a PSA layer on each face thereof, PSA has been widely used for joining or fastening items, and for like purposes in various fields. When compared to a double-faced PSA sheet using a non-porous plastic film as the substrate, a double-faced PSA sheet (foam-backed double-faced PSA sheet) using a foam as the substrate may be more advantageous in terms of the shock-absorbing ability or the conformability to uneven surfaces, etc. When compared to a double-faced PSA sheet using a non-woven fabric as the substrate, a foam-backed double-faced PSA sheet may be more advantageous in terms of the water resistance, sealing properties, or the like. Technical literatures relating to a foam-backed double-faced PSA sheet include Japanese Patent Application Publication No. 2010-155969.

SUMMARY OF THE INVENTION

In late years, from the standpoint of making products lighter, smaller, and thinner, etc., it is expected for a substrate-backed double-faced PSA tape to produce desirable performance with a smaller overall thickness. For instance, with respect to foam-backed double-faced PSA sheets used in mobile devices such as mobile phones, smartphones and the like, a smaller overall thickness coupled with high performance are particularly desired. On the other hand, as latest mobile devices are produced with larger screens and higher functions, etc., even higher performance is demanded from a double-faced PSA sheet used , for example, for fastening a foreground display panel (glass screen, etc.) to a case. This is because a larger display panel has a larger mass, and also because a touchscreen display panel such as on a smartphone weighs more due to various layers provided on the back of its glass screen. Thus, greater repulsion resistance, push-off debonding strength and peel property under a constant load, etc., are needed of a double-faced PSA sheet used for securing such display panels.
However, it is difficult to attain a smaller overall thickness in a foam- backed double- faced PSA sheet while increasing the repulsion resistance thereof. This is because in order to make a foam- backed double- faced PSA sheet having a smaller overall thickness, it is more advantageous to use a thinner foam substrate; however, a thinner foam substrate has a lower ability to distribute stress, and thus, the repulsion resistance tends to decline.
One objective of the present invention is to provide a double-faced PSA sheet that comprises a foam substrate, has a small overall thickness and exhibits excellent repulsion resistance.
The double-faced PSA sheet disclosed herein comprises a foam substrate, a first PSA layer provided on a first face of the foam substrate, and a second PSA layer provided on a second face of the foam substrate. At least one of the first PSA layer and the second PSA layer is constituted with a rubber-based PSA comprising, as a base polymer, a block copolymer of a mono-vinyl-substituted aromatic compound and a conjugated diene compound. The double-faced PSA sheet has an overall thickness of 400 $\mu$m or smaller. A double-faced PSA sheet (a foam-backed double-faced PSA sheet) having such a constitution may exhibit good repulsion resistance for a small overall thickness because the PSA layer is constituted with the rubber-based PSA. A preferable foam substrate has a thickness of, for instance, 60 $\mu$m or larger, but 300 $\mu$m or smaller.
In a preferable embodiment of the double-faced PSA sheet disclosed herein, the rubber-based PSA comprises a tackifier resin. For example, it preferably comprises as the tackifier resin a high softening point resin having a softening point of 120 °C or above. Particularly preferable examples of such a high softening point resin include terpene-phenol resins.
The art disclosed herein can be practiced preferably in an embodiment where the tackifier resin comprises a low softening point resin having a softening point below 120 °C and a high softening point resin having a softening point of 120°C or above. According to such an embodiment, can be obtained a higher performance double-faced PSA sheet. The high softening point resin preferably comprises a terpene-phenol resin.

The art disclosed herein can be practiced preferably in an embodiment where the rubber-based PSA comprises a tackifier resin having a hydroxyl value of 80 mgKOH/g or higher. According to such an embodiment, can be obtained a higher performance double-faced PSA sheet.

BRIEF DESCRIPTION OF THE DRAWINGS

Fig. 1 shows a schematic cross-sectional diagram illustrating the constitution of a double-faced PSA sheet according to an embodiment.
Fig. 2(a) and Fig. 2(b) show illustrative views of a test sample used for a measurement of push-off debonding strength.
Fig. 3 shows a diagram illustrating a method for measuring the push-off debonding strength.
Fig. 4(a) and Fig. 4(b) show illustrative views of a test sample used for evaluation of the impact resistance.
Fig. 5(a) and Fig. 5(b) show illustrative views of a test sample used for evaluation of the water resistance.
Fig. 6 shows a diagram illustrating a method for evaluating the repulsion resistance.
Fig. 7 shows a diagram illustrating a method for testing the peel property under a constant load.

DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.
In the drawings referenced below, a common reference numeral is assigned to members or sites producing the same effects, and duplicated descriptions are sometimes omitted or simplified. The embodiments described in the drawings are schematized for clear illustration of the present invention, and do not represent the accurate sizes or reduction scales of the PSA sheet to be provided as an actual product by the present invention.

As used herein, the term "PSA" refers to, as described earlier, a material that exists as a soft solid (a viscoelastic material) in a room temperature range and has a property to adhere easily to an adherend with some pressure applied. As defined in "Adhesion : Fundamental and Practice" by C. A. Dahlquist (McLaren & Sons (1966), P. 143), PSA referred to herein is a material that has a property satisfying complex tensile modulus $E^*(1Hz) < 10^7$ dyne/cm$^2$ (typically, a material that exhibits the said characteristics at 25°C). The "base polymer" of a PSA refers to the primary component among rubbery polymers (polymers that exhibit rubber elasticity in a room temperature range) contained in the PSA, that is, a component accounting for 50 % by mass or more of all rubbery polymers.

As used herein, "block copolymer of a mono-vinyl-substituted aromatic compound and a conjugated diene compound" refers to a polymer comprising at least one each of a segment (segment A) that comprises a mono-vinyl-substituted aromatic compound as a primary monomer and a segment (segment B) that comprises a conjugated diene compound as a primary monomer, with the primary monomer being a copolymer component accounting for more than 50 % by mass (the same applies hereinafter). In general, the glass transition temperature of segment A is higher than that of segment B. Examples of a typical constitution of such a polymer include an ABA triblock copolymer having a triblock structure where segment B (soft segment) is coupled to segment A (hard segment) at each terminal, an AB diblock copolymer having a diblock structure comprising one segment A and one segment B, and the like.

As used herein, "styrene-based block copolymer" refers to a polymer comprising at least one styrene block. The "styrene block" refers to a segment comprising styrene as a primary monomer. A typical example of a styrene block referred to herein is a segment consisting essentially of styrene. "Styrene-isoprene block copolymer" refers to a polymer comprising at least one styrene block and at least one isoprene block (a segment comprising isoprene as a primary monomer). Typical examples of a styrene-isoprene block copolymer include a triblock copolymer having a triblock structure where an isoprene block (soft segment) is coupled to a styrene block (hard segment) at each terminal, a diblock copolymer having a diblock structure comprising one isoprene block and one styrene block, and the like. "Styrene-butadiene block copolymer" refers to a polymer comprising at least one styrene block and at least one butadiene block (a segment comprising butadiene as a primary monomer).

As used herein, "the styrene content" in a styrene-based block copolymer refers to the mass fraction of styrene residue contained in the total mass of the block copolymer. The styrene content can be measured by NMR (nuclear magnetic resonance spectroscopy).
The diblock content (which hereinafter may be referred to as the "diblock fraction" or "diblock ratio") in a styrene-based block copolymer can be determined by the following method. That is, a given styrene-based block copolymer is dissolved in tetrahydrofuran (THF) and subjected to high-performance liquid chromatography at a temperature of 40 °C with the THF as the mobile phase passing at a flow rate of 1 mL/min through four linearly connected columns consisting of two each of liquid chromatography columns GS5000H and G4000H both available from Tosoh Corporation; from the resulting chromatogram, the area of the peak corresponding to the diblock copolymer is determined; and the diblock fraction is determined as the percentage of the area of the peak corresponding to the diblock relative to the total area of all peaks.

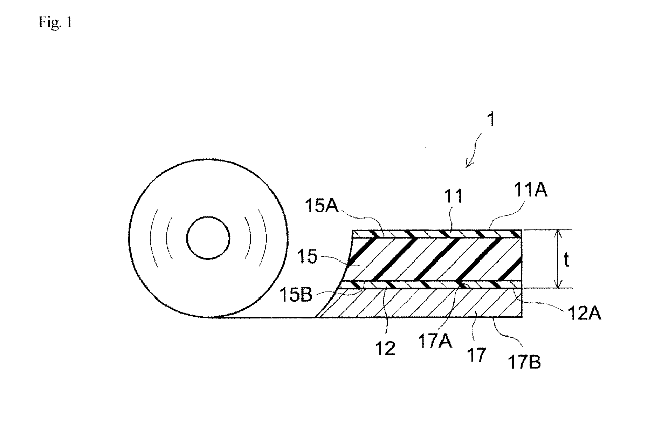

The PSA sheet (which can be a long sheet such as tape) disclosed herein comprises a foam substrate, and a first PSA layer and a second PSA layer provided on a first face and a second face of the foam substrate, respectively. It may be an adhesively double-faced PSA sheet in an embodiment having, for instance, the cross-sectional structure shown in Fig. 1. Double-faced PSA sheet 1 comprises foam substrate sheet 15 as well as first and second PSA layers 11 and 12 backed by the two faces of substrate 15, respectively. More specifically, first PSA layer 11 and second PSA layer 12 are provided on first face 15A and second face 15B of substrate 15, respectively, with both faces 15A and 15B being non-releasing. Prior to use (before adhered to an adherend), as shown in Fig. 1, double-faced PSA sheet 1 can be in a roll wherein PSA sheet 1 is wound along with release liner 17 having front face (release face) 17A and back face (release face) 17B. In double-faced PSA sheet 1 in such an embodiment, the surface (second adhesive face 12A) of second PSA layer 12 is protected with front face 17A of release liner 17, and the surface (first adhesive face 11A) of first PSA layer 11 is protected with back face 17B of release liner 17. Alternatively, it may be in an embodiment where first adhesive face 11A and second adhesive face 12A are protected with two separate release liners, respectively.

There are no limitations to the release liner, and any conventional release paper or the like can be used. For example, the following can be used: a release liner having a release layer on a surface of a substrate such as a plastic film or a sheet of paper, etc.; a release liner formed from a poorly-adhesive material such as a fluorine-based polymer (polytetrafluoroethylene, etc.) or a polyolefin-based resin (polyethylene, polypropylene, etc.); or the like. The release layer can be formed, for instance, by processing the surface of the substrate with a release agent such as a silicone-based, a long-chain alkyl-based, a fluorine-based, a molybdenum disulfide-based release agent or the like.

The double-faced PSA sheet disclosed herein has an overall thickness of 400 $\mu$m or smaller (typically 350 $\mu$m or smaller). From the standpoint of contributing to production of thinner, smaller and lighter goods and efficient use of resources, etc., a preferable double-faced PSA sheet has an overall thickness of 300 $\mu$m or smaller (more preferably 250 $\mu$m or smaller, e.g., 230 $\mu$m or smaller). The lower limit of the overall thickness of the double-faced PSA sheet is not particularly limited. In typical, from the standpoint of the impact resistance and the water resistance, etc., the double-faced PSA sheet has an overall thickness of suitably 50 $\mu$m or larger, or preferably 70 $\mu$m or larger (more preferably 100 $\mu$m or larger, or even 150 $\mu$m or larger, e.g., 190 $\mu$m or larger).

Herein, the overall thickness of a double- faced PSA sheet refers to the thickness from the surface of one PSA layer to the surface of the other PSA layer, and in Fig. 1, it refers to the thickness, t, from the first adhesive face 11A to the second adhesive face 12A. Thus, for example, even if the double- faced PSA sheet is in an embodiment having release liners that protect its adhesive faces prior to application to an adherend, the thicknesses of the release liners are not included in the thickness of the double- faced PSA sheet as referred to herein.

<Rubber-based PSA>

In the art disclosed herein, at least one of the first PSA layer and the second PSA layer is constituted with a prescribed rubber-based PSA. Both the first PSA layer and the second PSA layer can be constituted with a prescribed rubber-based PSA.

(Base polymer)

The rubber- based PSA comprises as a base polymer a block copolymer of a mono- vinyl- substituted aromatic compound and a conjugated diene compound. The mono- vinyl- substituted aromatic compound refers to a compound in which a functional group containing a vinyl group is bonded to an aromatic ring. Typical examples of the aromatic ring include a benzene ring (which can be a benzene ring substituted with a functional group (e.g., an alkyl group) containing no vinyl groups) . Examples of the mono- vinyl- substituted aromatic compound include styrene, $\alpha$- methyl styrene, vinyl toluene, vinyl xylene, and the like. Examples of the conjugated diene compound include 1, 3- butadiene, isoprene, and the like. Among such block copolymers, one species can be used solely, or two or more species can be used together as the base polymer.

Segment A (hard segment) in the block copolymer comprises the mono-vinyl-substituted aromatic compound (for which, two or more species can be used together) at a copolymerization ratio of preferably 70 % by mass or greater (more preferably 90 % by mass or greater, or it can be essentially 100 % by mass). Segment B (soft segment) in the block copolymer comprises the conjugated diene compound (for which, two or more species can be used) at a copolymerization ratio of preferably 70 % by mass or greater (more preferably 90 % by mass or greater, or it can be essentially 100 % by mass). According to such a block copolymer, a double-faced PSA sheet of higher performance can be obtained.

The block copolymer may be a diblock copolymer, a triblock copolymer, a radial copolymer , a mixture of these, or the like. In a triblock copolymer or a radial copolymer, it is preferable that segment A (e.g., a styrene block) is placed at a terminal of the polymer chain. Segment A placed terminally on the polymer chain is likely to aggregate to form a domain, whereby pseudo crosslinks are formed, resulting in increased cohesive strength of the PSA. In the art disclosed herein, from the standpoint of the adhesive strength (peel strength) to an adherend and the repulsion resistance, for example, a preferable block copolymer has a diblock fraction of 30 % by mass or greater (more preferably 40 % by mass or greater, even more preferably 50 % by mass or greater, or especially preferably 60 % by mass or greater, typically 65 % by mass or greater, e.g., 70 % by mass or greater). From the standpoint of the resistance against continuously applied stress (e.g., the peel property under a constant load described later), can be used a block copolymer having a diblock fraction of preferably 90 % by mass or smaller (more preferably 85 % by mass or smaller, e.g., 80 % by mass or smaller). For instance, it is preferable to use a block copolymer having a diblock fraction of 60 to 85 % by mass.

(Styrene-based block copolymer)

In an embodiment of the art disclosed herein, the base polymer is a styrene-based block copolymer. For instance, it can be practiced preferably in an embodiment wherein the base polymer comprises at least one of a styrene-isoprene block copolymer and a styrene-butadiene block copolymer. It is preferable that the styrene-based block copolymer contained in the PSA comprises either a styrene-isoprene block copolymer at a ratio of 70 % by mass or greater, a styrene-butadiene block copolymer at a ratio of 70 % by mass or greater, or a styrene-isoprene block copolymer and a styrene-butadiene block copolymer at a combined ratio of 70 % by mass or greater. In a preferable embodiment, essentially all (e.g., 95 to 100 % by mass) of the styrene-based block copolymer is a styrene-isoprene block copolymer. In another preferable embodiment, essentially all (e.g., 95 to 100 % by mass) of the styrene-based block copolymer is a styrene-butadiene block copolymer. According to such compositions, can be preferably obtained a double-faced PSA sheet that exhibits excellent repulsion resistance in a good balance with other adhesive properties (e.g., peel property under a constant load).

The styrene-based block copolymer can be a diblock copolymer, a triblock copolymer, a radial copolymer, a mixture of these, or the like. In a triblock copolymer and a radial copolymer, it is preferable that a styrene block is placed at a terminal of the polymer chain. The styrene block placed terminally on the polymer chain is likely to aggregate to form a domain, whereby pseudo crosslinks are formed, resulting in increased cohesive strength of the PSA. In the art disclosed herein, from the standpoint of the adhesive strength (peel strength) to an adherend and the repulsion resistance, for instance, a preferable styrene-based block copolymer has a diblock fraction of 30 % by mass or greater (more preferably 40 % by mass or greater, even more preferably 50 % by mass or greater, or especially preferably 60 % by mass or greater, typically 65 % by mass or greater). The styrene-based block copolymer may have a diblock fraction of 70 % by mass or larger (e.g., 75 % by mass or larger). From the standpoint of the peel property under a constant load, etc., can be used a styrene-based block copolymer having a diblock fraction of preferably 90 % by mass or smaller (more preferably 85 % by mass or smaller, e.g., 80 % by mass or smaller). For example, can be preferably used a styrene-based block copolymer having a diblock fraction of 60 to 85 % by mass.

The styrene content in the styrene-based block copolymer can be, for instance, 5 to 40 % by mass. From the standpoint of the repulsion resistance and the peel property under a constant load, in usual, it is preferable that the styrene content is 10 % by mass or greater (more preferably greater than 10 % by mass, e.g., 12 % by mass or greater). From the standpoint of the adhesive strength to an adherend, the styrene-based block copolymer has a styrene content of preferably 35 % by mass or less (typically 30 % by mass or less, or more preferably 25 % by mass or less, e.g., less than 20 % by mass). For example, can be preferably used a styrene-based block copolymer having a styrene content of 12 % by mass or greater, but less than 20 % by mass.

(Tackifier resin)

In a preferable embodiment of the art disclosed herein, the rubber-based PSA further comprises a tackifier resin in addition to the base polymer (e.g., a styrene-based block copolymer). As the tackifier resin, can be used one, two or more species selected from various known tackifier resins such as petroleum resins, terpene resins, rosin-based resins, rosin-derivative resins, ketone-based resins, and the like.

Examples of the petroleum resin include aliphatic (C5-based) petroleum resins, aromatic (C9-based) petroleum resins, C5/C9 copolymer-based petroleum resins, alicyclic petroleum resins, hydrogenated products of these, and the like.

Examples of the terpene resins include terpene resins such as poly-$\alpha$-pinene, poly-$\beta$-pinene, poly-dipentene, etc. (which hereinafter may be referred to as "unmodified terpene resins" to be clearly distinguished from modified terpene resins listed later); modified terpene resins obtainable from these via a modification (phenol modification, styrene modification, hydrogenation, hydrocarbon modification, or the like); and so on. Examples of the modified terpene resin include terpene-phenol resins, styrene-modified terpene resins, hydrogenated terpene resins, and the like.

The "terpene-phenol resin" refers to a polymer containing terpene residue and phenol residue, and the scope thereof encompasses both a terpene- phenol copolymer resin and a phenol- modified terpene resin, with the former being a copolymer of a terpene and a phenolic compound, and the latter being a phenol- modification product of a terpene homopolymer or a terpene copolymer (a terpene resin, typically an unmodified terpene resin) . Preferable examples of a terpene constituting the terpene- phenol resin include mono- terpenes such as α- pinene, β- pinene, limonene (including *d-* limonene, *l-* limonene, and *dl l-* limonene (dipentene) ) , and the like.

Examples of the rosin-based resin include unmodified rosins (raw rosins) such as gum rosin, wood rosin, tall-oil rosin, etc.; modified rosins obtainable from these unmodified rosins via a modification such as hydrogenation, disproportionation, polymerization, etc. (hydrogenated rosins, disproportionated rosins, polymerized rosins, other chemically-modified rosins, etc.); and the like.

Examples of the rosin-derived resins include rosin esters such as unmodified rosins esterified with alcohols (i.e., esterification products of unmodified rosins) and modified rosins (hydrogenated rosins, disproportionated rosins, polymerized rosins, etc.) esterified with alcohols (i.e., esterification products of modified rosins), and the like; unsaturated fatty-acid-modified rosins obtainable from unmodified rosins and modified rosins (hydrogenated rosin, disproportionated rosin, polymerized rosin, etc.) via modifications with unsaturated fatty acids; unsaturated fatty-acid-modified rosin esters obtainable from rosin esters via modifications with unsaturated fatty acids; rosin alcohols obtainable via reduction of carboxyl groups from unmodified rosins, modified rosins (hydrogenated rosins, disproportionated rosins, polymerized rosin, etc.), unsaturated fatty-acid-modified rosins or unsaturated fatty-acid-modified rosin esters; metal salts of rosins including unmodified rosins, modified rosins, various rosin derivatives, etc. (in particular, metal salts of rosin esters); rosin phenol resins obtainable from rosins (unmodified rosins, modified rosins, various rosin derivatives, etc.) via addition of phenol in the presence of an acid catalyst followed by thermal polymerization; and so on.

From the standpoint of the repulsion resistance and the peel property under a constant load, etc., in usual, the tackifier resin content is suitably 20 parts by mass or greater, preferably 30 parts by mass or greater, or more preferably 40 parts by mass or greater (e.g., 50 parts by mass or greater) relative to 100 parts by mass of the base polymer. From the standpoint of properties at a low temperature (e.g., the adhesive strength and the impact resistance under a low temperature condition), etc., in typical, the tackifier resin content is suitably 200 parts by mass or less, or preferably 150 parts by mass or less relative to 100 parts by mass of the base polymer. The tackifier resin content can be 100 parts by mass or less (e.g., 80 parts by mass or less) relative to 100 parts by mass of the base polymer.

(High softening point resin)

The art disclosed herein can be practiced preferably in an embodiment where the rubber-based PSA comprises as the tackifier resin a high softening point resin having a softening point of 120 °C or above. A double-faced PSA sheet in such an embodiment is preferable from the standpoint of the repulsion resistance and the peel property under a constant load. In a preferable embodiment, the high softening point resin comprises a tackifier resin having a softening point of 125 °C or above (more preferably 130 °C or above, or even more preferably 135 °C or above, e.g., 140 °C or above). From the standpoint of the adhesive strength to an adherend, in usual, the high softening point resin has a softening point of suitably 200 °C or below, preferably 180 °C or below, or even more preferably 170 °C or below (e.g., 160 °C or below).

The softening point of a tackifier resin referred to herein is defined as a value measured based on the softening point test method (ring and ball method) specified in JIS K5902 and JIS K2207. In particular, a sample is quickly melted at a lowest possible temperature, and with caution to avoid bubble formation, the melted sample is poured into a ring to the top, with the ring being placed on top of a flat metal plate. After cooled, any portion of the sample risen above the plane including the upper rim of the ring is sliced off with a small knife that has been somewhat heated. Following this, a support (ring support) is placed in a glass container (heating bath) having a diameter of 85 mm or larger and a height of 127 mm or larger, and glycerin is poured into this to a depth of 90 mm or deeper. Then, a steel ball (9.5 mm diameter, weighing 3.5 g) and the ring filled with the sample are immersed in the glycerin while preventing them from touching each other, and the temperature of glycerin is maintained at 20 °C ± 5 °C for 15 minutes. The steel ball is then placed at the center of the surface of the sample in the ring, and this is placed on a prescribed location of the support. While keeping the distance between the ring top and the glycerin surface at 50 mm, a thermometer is placed so that the center of the mercury ball of the thermometer is as high as the center of the ring, and the container is heated evenly by projecting a Bunsen burner flame at the midpoint between the center and the rim of the bottom of the container. After the temperature has reached 40 °C from the start of heating, the rate of the bath temperature rise must be kept at 5 °C ± 0.5 °C per minute. As the sample gradually softens, the temperature at which the sample flows out of the ring and finally touches the bottom plate is read as the softening point. Two or more measurements of softening point are performed at the same time, and their average value is used.

As the high softening point resin, can be preferably used a terpene-phenol resin, a polymerized rosin, an esterification product of a polymerized rosin, or the like. These high softening point resins can be used solely as a single species, or in a suitable combination of two or more species.

In a preferable embodiment, the high softening point resin comprises one, two or more species of terpene-phenol resin. For instance, in a preferable embodiment, 25 % by mass or more (more preferably 30 % by mass or more) of all high softening point resins are one, two or more species of terpene-phenol resin. 50 % by mass or greater (more preferably 70 % by mass or greater, or even more preferably 80 % by mass or greater, e.g., 90 % by mass or greater) of the high softening point resin may be a terpene-phenol resin, or essentially all (e.g., 95 % by mass or greater) of the high softening point resin can be a terpene-phenol resin. In usual, can be preferably used a terpene-phenol resin having a softening point of 120 °C or above, but 200 °C or below (typically 120 °C or above, but 180 °C or below, e.g., 125 °C or above, but 170 °C or below).

As the terpene-phenol resin, can be preferably used a terpene-phenol resin having a hydroxyl value (OH value) of 40 mgKOH/g or higher (typically 40 mgKOH/g to 200 mgKOH/g, e.g., 40 mgKOH/g to 160 mgKOH/g) while having a softening point of 120 °C or above. According to a terpene-phenol resin having such a hydroxyl value, can be obtained a double-faced PSA sheet of higher performance.

As the hydroxyl value, can be used a value measured by the potentiometric titration method specified in JIS K0070:1992. Details of the method are described below.

[Method for measuring hydroxyl value]

1. Reagents

(1) As the acetylation reagent, is used a solution prepared by mixing with sufficient stirring about 12.5 g (approximately 11.8 mL) of anhydrous acetic acid and pyridine added up to a total volume of 50 mL. Alternatively, is used a solution prepared by mixing with sufficient stirring about 25 g (approximately 23.5 mL) of anhydrous acetic acid and pyridine up to a total volume of 100 mL.
(2) As the titrant, is used a 0.5 mol/L potassium hydroxide (KOH) solution in ethanol.
(3) For others, toluene, pyridine, ethanol and distilled water should be ready for use.

2. Procedures

(1) Approximately 2 g of analyte is accurately weighed out in a flat-bottom flask, 5 mL of the acetylation reagent and 10 mL of pyridine are added, and an air condenser is placed on.
(2) The flask is heated in a bath at 100 °C for 70 minutes and then cooled. From the top of the condenser, 35 mL of toluene is added as a solvent and stirred. Subsequently, 1 mL of distilled water is added and the resultant is stirred to decompose any remaining anhydrous acetic acid. The flask is heated in the bath again for 10 minutes to complete the decomposition and then cooled.
(3) After rinsed with 5 mL of ethanol, the condenser is removed. Subsequently, 50 mL of pyridine is added as a solvent and the resultant is stirred.
(4) Using a volumetric pipette, is added 25 mL of the 0.5 mol/L KOH ethanol solution.
(5) Potentiometric titration is carried out with the 0.5 mol/L KOH ethanol solution. The inflection point in the resulting titration curve is taken as the final point.
(6) For a blank titration, procedures (1) to (5) are carried out without addition of the analyte.

3. Calculations
The hydroxyl value is calculated by the following equation:

$$\text{Hydroxyl value (mgKOH/g)} = [(B - C) \times f \times 28.05]/S + D$$

wherein:

B is the volume (mL) of the 0.5 mol/L KOH ethanol solution used in the blank titration;
C is the volume (mL) of the 0.5 mol/L KOH ethanol solution used to titrate the analyte;
f is the factor of the 0.5 mol/L KOH ethanol solution;
S is the mass of analyte (g);
D is the acid value;
28.05 is one half the molecular weight of KOH.

The art disclosed herein can be practiced preferably, for example, in an embodiment where the rubber-based PSA comprises a high softening point resin (H1) having a hydroxyl value of 40 mgKOH/g or higher, but lower than 80 mgKOH/g, and a high softening point resin (H2) having a hydroxyl value of 80 mgKOH/g or higher (typically 80 mgKOH/g to 160 mgKOH/g, e.g., 80 mgKOH/g to 140 mgKOH/g) in combination. In this case, the high softening point resin (H1) and the high softening point resin (H2) can be used at a mass ratio (H1:H2) ranging from 1:5 to 5:1, or in usual, they can be suitably used at a mass ratio of 1:3 to 3:1 (e.g., 1:2 to 2: 1). In a preferable embodiment, each of the high softening point resins (H1 and H2) is a terpene-phenol resin.

From the standpoint of the repulsion resistance and the peel property under a constant load, the high softening point resin content can be, for instance, 20 parts by mass or greater, or preferably 30 parts by mas or greater (e.g., 35 parts by mass or greater) relative to 100 parts by mass of the base polymer. From the standpoint of the adhesive strength and properties at a low temperature (e.g., the impact resistance under a low temperature condition), etc., in usual, the high softening point resin content is suitably 100 parts by mass or less relative to 100 parts by mass of the base polymer, preferably 80 parts by mass or less, or more preferably 70 parts by mass or less. The high softening point resin content can be 60 parts by mass or less (e.g., 50 parts by mass or less).

(Low softening point resin)

The art disclosed herein can be practiced in an embodiment where the rubber-based PSA comprises a low softening point resin in place of or in addition to the high softening point resin. In a preferable embodiment, the rubber-based PSA comprises a high softening point resin having a softening point of 120 °C or above and a low softening point resin having a softening point below 120 °C.

As the low softening point resin, can be used a resin having a softening point of, for instance, 40 °C or above (typically 60 °C or above). From the standpoint of the repulsion resistance and the peel property under a constant load, in usual, can be preferably used a resin having a softening point of 80 °C or above (more preferably 100 °C or above), but below 120 °C. For example, a preferable low softening point resin has a softening point of 110 °C or above, but below 120 °C.

The PSA disclosed herein can be made preferably in an embodiment comprising, as the low softening point resin, at least one of a petroleum resin and a terpene resin (typically an unmodified terpene resin) . For instance, can be preferably employed a composition wherein the primary component (i.e., a component accounting for more than 50 % by mass) of the low softening point resin is a petroleum resin, terpene resin, a combination of a petroleum resin and a terpene resin, or the like. From the standpoint of the adhesive strength and the miscibility, in a preferable embodiment, the primary component of the low softening point resin is a terpene resin (e.g., poly- $\beta$- pinene) . Essentially all (e.g., 95 % by mass or more) of the low softening point resin can be a terpene resin.

From the standpoint of the adhesive strength to an adherend, the low softening point resin content can be, for instance, 10 parts by mass or greater relative to 100 parts by mass of the base polymer, or in typical, it is suitable to be 15 parts by mass or greater (e.g., 20 parts by mass or greater). From the standpoint of the repulsion resistance, in usual, the low softening point resin content is suitably 120 parts by mass or less, preferably 90 parts by mass or less, or more preferably 70 parts by mass or less (e.g., 60 parts by mass or less). The low softening point resin content can be even 50 parts by mass or less (e.g., 40 parts by mass or less).

When the tackifier resin comprises a low softening point resin and a high softening point resin, it is preferable to use them at a mass ratio ([low softening point resin]:[high softening point resin]) of 1:5 to 3:1 (more preferably 1:5 to 2:1). The art disclosed herein can be practiced preferably in an embodiment where the high softening point resin content in the tackifier resin is higher than the low softening point resin content (e.g., an embodiment where the mass ratio [low softening point resin]:[high softening point resin] is 1:1.2 to 1:5). According to such an embodiment, can be obtained a double-faced PSA sheet of higher performance.

(Tackifier resin having a high hydroxyl value)

The art disclosed herein can be practiced preferably in an embodiment where the rubber-based PSA comprises a tackifier resin having a hydroxyl value of 80 mgKOH/g or higher (e.g., 90 mgKOH/g or higher). The tackifier resin having a high hydroxyl value has a hydroxyl value of typically 200 mgKOH/g or lower, or preferably 180 mgKOH/g or lower (e.g., 160 mgKOH/g or lower). For the hydroxyl value, can be used a value measured by the potentiometric titration method specified in JIS K0070:1992, specifically, a value determined by applying the method for measuring the hydroxyl value described earlier. According to a PSA containing a tackifier resin having such a high hydroxyl value, can be obtained a double-faced PSA sheet of higher performance. For example, can be obtained a double-faced PSA sheet combining high levels of repulsion resistance and peel property under a constant load as well as high levels of other adhesive properties.

As the tackifier resin having a high hydroxyl value, among the various tackifier resins listed earlier, can be used solely one species having a hydroxyl value equal to or higher than a prescribed value, or a few or more such species in a suitable combination. In a preferable embodiment, as the tackifier resin having a high hydroxyl value, at least a terpene-phenol resin is used. A terpene-phenol resin is preferable because the hydroxyl value can be changed at will by modifying the copolymerization ratio of phenol. Preferably, 50 % by mass or greater (more preferably 70 % by mass or greater, e.g., 90 % by mass or greater) of the tackifier resin having a high hydroxyl value contained in the PSA is a terpene-phenol resin, or essentially all (e.g., 95 to 100 % by mass, or even 99 to 100 % by mass) thereof may be a terpene-phenol resin.

From the standpoint of the repulsion resistance and the peel property under a constant load, the tackifier resin content having a high hydroxyl value can be, for instance, 5 parts by mass or greater relative to 100 parts by mass of the base polymer, or in typical, it is preferable to be 10 parts by mass or greater (e.g., 15 parts by mass or greater). From the standpoint of the adhesive strength, etc., in usual, the tackifier resin content having a high hydroxyl value relative to 100 parts by mass of the base polymer is suitably 100 parts by mass or less, preferably 80 parts by mass or less, or more preferably 60 parts by mass or less. The tackifier resin content having a high hydroxyl value can be 50 parts by mass or less (e.g., 30 parts by mass or less).

The softening point of the tackifier resin having a high hydroxyl value is not particularly limited. In other words, can be used any tackifier resin having a high hydroxyl value that falls under the scope of either the high softening point resin or the low softening point resin as described above.

For example, can be preferably used a tackifier resin having a high hydroxyl value and a softening point of 100 °C or above (typically above 100 °C, e.g., 110 °C or above). A tackifier resin having a high hydroxyl value and a softening point of 120 °C or above (typically above 120 °C, preferably 125 °C or above, e.g., 130 °C or above) is especially preferable. According to such a tackifier resin that has a high hydroxyl value and a high softening point, can be obtained a double-faced PSA sheet of higher performance. From the standpoint of the properties of a double-faced PSA sheet at a low temperature, it is usually preferable to use a tackifier resin having a high hydroxyl value and a softening point of 200 °C or below (e.g., 100 °C or above, but 200 °C or below). It is more preferable to use a tackifier resin having a high hydroxyl value and a softening point of 120 °C or above, but 180 °C or below (e.g., 125 °C or above, but 170 °C or below).

The art disclosed herein can be practiced preferably in an embodiment where the rubber-based PSA comprises a tackifier resin (high softening point resin) having a softening point of 120 °C or above and 25 % by mass or greater (more preferably 30 % by mass or greater, e.g., 40 % by mass or greater) of the high softening point resin is a tackifier resin (e.g., a terpene-phenol resin) having a high hydroxyl value. 50 % by mass or greater (more preferably 70 % by mass or greater, or more preferably 80 % by mass or greater, e.g., 90 % by mass or greater) of the high softening point resin can be a tackifier resin having a high hydroxyl value, or essentially all (e.g., 95 to 100 % by mass) of the high softening point resin can be a tackifier resin having a high hydroxyl value.

(Tackifier resin having a low hydroxyl value)

The rubber-based PSA may comprise a tackifier resin (tackifier resin having a low hydroxyl value) having a hydroxyl value of zero or higher, but lower than 80 mgKOH/g, in place of or in addition to the tackifier resin having a high hydroxyl value. In a preferable embodiment, the rubber-based PSA comprises a tackifier resin having a hydroxyl value as high as, or higher than, 80 mgKOH/g as well as a tackifier resin having a hydroxyl value as low as zero or lower than 80 mgKOH/g. As the tackifier resin having a low hydroxyl value, among the various tackifier resins listed earlier, can be used solely one species having a hydroxyl value in the cited range, or a few or more such species in a suitable combination. For example, can be used a terpene-phenol resin, a petroleum resin (e.g., C5-based petroleum resins), a terpene resin (e.g., β-pinene polymers), a rosin-based resin (e.g., polymerized rosins), a rosin-derivative resin (e.g., esterification products of polymerized rosins), or the like, each having a hydroxyl value of zero or larger, but lower than 80 mgKOH/g.

The softening point of the tackifier resin having a low hydroxyl value is not particularly limited. In other words, can be used any tackifier resin having a low hydroxyl value that falls under the scope of either the high softening point resin or the low softening point resin described above.

In a preferable embodiment, the rubber-based PSA comprises, as the tackifier resin having a low hydroxyl value, a tackifier resin having a softening point below 120 °C (typically 80 °C or above, but below 120 °C, more preferably 100 °C or above, but below 120 °C, e.g.,110 °C or above, but below 120 °C). According to a PSA having such a composition, can be obtained a double-faced PSA sheet that exhibits a high adhesive strength as well as an excellent peel property under a constant load. The PSA may have a composition that comprises a tackifier resin (S1) having a low hydroxyl value and a softening point below 120 °C and a tackifier resin (S2) having a low hydroxyl value and a softening pint of 120 °C or above in combination. These can be used, for instance, at a mass ratio (S1:S2) of 1:5 to 5:1, and it is usually suitable to use them at a mass ratio of 1:3 to 3:1 (e.g., 1:2 to 2:1).

When the rubber-based PSA comprises a tackifier resin having a high hydroxyl value and a tackifier resin having a low hydroxyl value, it is preferable to use them at a mass ratio ([tackifier resin having a low hydroxyl value]:[tackifier resin having a high hydroxyl value]) of 1:5 to 5:1 (more preferably 1:3 to 3:1). According to such an embodiment, can be obtained a double-faced PSA sheet of higher performance.

(Isocyanate compound)

The rubber-based PSA in the art disclosed herein may further comprise an isocyanate compound. According to a rubber-based PSA having such a composition, can be obtained a double-faced PSA sheet that exhibits even higher repulsion resistance and greater peel property under a constant load. As the isocyanate compound, can be used preferably a multifunctional isocyanate (which refers to a compound having an average of two or more isocyanate groups per molecule, including a compound having an isocyanurate structure). As the multifunctional isocyanate, can be used one, two or more species selected from various isocyanate compounds (polyisocyanates) containing two or more isocyanate groups per molecule. Examples of such a multifunctional isocyanate include aliphatic polyisocyanates, alicyclic polyisocyanates, aromatic polyisocyanates, and the like.

Examples of an aliphatic polyisocyanate include 1, 2- ethylene diisocyanate; tetramethylene diisocyanates such as 1, 2- tetramethylene diisocyanate, 1, 3- tetramethylene diisocyanate, 1, 4- tetramethylene diisocyanate, etc.; hexamethylene diisocyanates such as 1, 2- hexamethylene diisocyanate, 1, 3- hexamethylene diisocyanate, 1 , 4- hexamethylene diisocyanate, 1, 5- hexamethylene diisocyanate, 1, 6- hexamethylene diisocyanate, 2, 5- hexamethylene diisocyanate, etc.; 2- methyl- 1, 5- pentane diisocyanate, 3- methyl- 1, 5- pentane diisocyanate, lysine diisocyanate, and the like.

Examples of an alicyclic polyisocyanate include isophorone diisocyanate; cyclohexyl diisocyanates such as 1,2-cyclohexyl diisocyanate, 1,3-cyclohexyl diisocyanate, 1,4-cyclohexyl diisocyanate, etc.; cyclopentyl diisocyanates such as 1,2-cyclopentyl diisocyanate, 1,3-cyclopentyl diisocyanate etc.; hydrogenated xylylene diisocyanate, hydrogenated tolylene diisocyanate, hydrogenated diphenylmethane diisocyanate, hydrogenated tetramethylxylene diisocyanate, 4,4'-dicyclohexylmethane diisocyanate, and the like.

Examples of an aromatic polyisocyanate include 2, 4- tolylene diisocyanate, 2, 6- tolylene diisocyanate, 4, 4'- diphenylmethane diisocyanate, 2, 4'- diphenylmethane diisocyanate, 2, 2'- diphenylmethane diisocyanate, 4, 4'- diphenylether diisocyanate, 2- nitrodiphenyl- 4, 4'- diisocyanate, 2, 2'- diphenylpropane- 4, 4'- diisocyanate, 3, 3'- dimethyldiphenylmethane- 4, 4'- diisocyanate, 4, 4'- diphenylpropane diisocyanate, m- phenylene diisocyanate, p- phenylene diisocyanate, naphthylene- 1, 4- diisocyanate, naphthylene- 1, 5- diisocyanate, 3, 3'- dimethoxydiphenyl- 4, 4'- diisocyanate, xylylene- 1, 4- diisocyanate, xylylene- 1, 3- diisocyanate and the like.

A preferable example of an isocyanate compound is a multifunctional isocyanate having an average of three or more isocyanate groups per molecule. Such a tri-functional or higher multifunctional isocyanate can be a multimer (typically a dimer or a trimer), a derivative (e.g., an addition product of a polyol and two or more multifunctional isocyanate molecules), a polymer or the like of a di-functional, tri-functional, or higher multifunctional isocyanate. Examples include multifunctional isocyanates such as a dimer and a trimer of a diphenylmethane diisocyanate, an isocyanurate (a cyclic trimer) of a hexamethylene diisocyanate, a reaction product of trimethylol propane and a tolylene diisocyanate, a reaction product of trimethylol propane and a hexamethylene diisocyanate, polymethylene polyphenyl isocyanate, polyether polyisocyanate, polyester polyisocyanate, and the like. Commercial multifunctional isocyanates include trade name "DURANATE TPA-100" available from Asahi Kasei Chemicals Corporation; trade names "CORONATE L", "CORONATE HL", "CORONATE HK", "CORONATE HX", "CORONATE 2096" available from Nippon Polyurethane Kogyo Co., Ltd.; and the like.

When an isocyanate compound is used, relative to 100 parts by mass of the base polymer, the used amount thereof is suitably more than zero part by mass, but 10 parts by mass or less (typically 0.01 to 10 parts by mass). In usual, an isocyanate compound can be used in an amount of suitably 0.1 to 10 parts by mass or preferably 0.1 to 5 parts by mass (typically 0.3 to 3 parts by mass, e.g., 0.5 to 1 part by mass) relative to 100 parts by mass of the base polymer. With use of an isocyanate compound in such a range, can be obtained a PSA sheet having particularly well-balanced properties.

(Other components)

The rubber-based PSA may comprise one, two or more species of rubbery polymer as necessary besides the base polymer. Such a rubbery polymer can be one of various polymers known in the PSA field, such as rubber-based polymers, acrylic polymers, polyester-based polymers, urethane-based polymers, polyether-based polymers, silicone-based polymers, polyamide-based polymers, fluorine-based polymers, and the like. Examples of a rubber-based rubbery polymer include natural rubber, styrene-butadiene rubber (SBR), acrylonitrile-butadiene rubber (NBR), isoprene rubber, chloroprene rubber, polyisobutylene, butyl rubber, regenerated rubber, and the like. When the rubber-based PSA contains another rubbery polymer besides the base polymer, the other rubbery polymer can be used in an amount of suitably 50 parts by mass or less, preferably 30 parts by mass or less, or more preferably 10 parts by mass or less (e.g., 5 parts by mass or less) relative to 100 parts by mass of the base polymer. The art disclosed herein can be practiced preferably in an embodiment essentially free of such other rubbery polymer besides the base polymer (e.g., an embodiment where the other rubbery polymer content is zero to 1 part by mass relative to 100 parts by mass of the base polymer).

The rubber-based PSA may contain as necessary various additives generally used in the PSA field, such as leveling agent, crosslinking agent, crosslinking co-agent, plasticizer, softening agent, filler, colorant (pigment, dye, etc.), anti-static agent, anti-aging agent, ultraviolet light absorber, anti-oxidant, photostabilizing agent, and so on. With respect to these various additives, those heretofore known can be used by typical methods. The art disclosed herein can be practiced preferably in an embodiment where the rubber-based PSA is essentially free of a liquid rubber such as liquid polybutene, etc., (e.g., an embodiment where the liquid rubber content is 1 part by mass or less relative to 100 parts by mass of the base polymer, or an embodiment where the liquid rubber content is zero part by mass). According to such a PSA, can be obtained a double-faced PSA sheet that exhibits even higher repulsion resistance and/or greater peel property under a constant load.

In a preferable embodiment, the rubber-based PSA may have a composition where the combined amount of the base polymer and the tackifier resin accounts for 90 % by mass or more of the total mass of the rubber-based PSA (i.e., the mass of a PSA layer constituted with this rubber-based PSA). For example, in a preferable embodiment, the combined amount of the base polymer and the tackifier resin is 90 to 99.8 % by mass (typically, for instance, 95 to 99.5 % by mass) of the total mass of the rubber-based PSA.

In another preferable embodiment, the rubber-based PSA may have a composition essentially free of a chelate compound. Herein, the chelate compound refers to, for instance, a chelate complex of an alkaline earth metal oxide and a resin (an alkyl phenol resin, etc.) having a functional group (hydroxyl group, methylol group, etc.) capable of coordinating the oxide. The art disclosed herein can be practiced preferably in an embodiment where the rubber-based PSA is essentially free of such a chelate compound or in an embodiment containing none or at most 1 % by mass of a chelate compound. According to such an embodiment, can be obtained a double-faced PSA sheet that exhibits even greater adhesive strength.

<Foam substrate>

In the art disclosed herein, the foam substrate (typically a foam substrate sheet) refers to a substrate comprising a portion having gas bubbles (a gas-bubble structure) and typically to a substrate comprising a thin layer of foam (a foam layer) as a component. The foam substrate may consists essentially of one, two or more foam layers, or may be a complex substrate comprising a foam layer and a non-foam layer (e.g., the substrate may comprise the foam layer and the non-foam layer overlaid on top of each other). Herein, the non-foam substrate refers to a layer that include no gas bubble structures. When the foam substrate comprises two or more foam layers, the materials and structures thereof can be the same or different.

With referring to a foam substrate having a structure consisting essentially of a single foam layer as a main example, the present invention is described below while the structure of the foam substrate in the art disclosed herein is not to be limited to such an example.

The thickness of the foam substrate can be suitably selected in accordance with the strength, flexibility, and intended purposes, etc., of the double-faced PSA sheet as long as the overall thickness of the double-faced PSA sheet does not exceed 400 μm. From the standpoint of ensuring to obtain a PSA layer thickness capable of producing desirable adhesive properties, in usual, the foam substrate has a thickness of suitably 350 μm or smaller (e.g., 300 μm or smaller), preferably 250 μm or smaller, or more preferably 220 μm or smaller, e.g., 200 μm or smaller. A foam substrate having a thickness of 180 μm or smaller can be used as well. From the standpoint of the repulsion resistance and the impact resistance, etc., of the double-faced PSA sheet, the thickness of the foam substrate is suitably 30 μm or larger, preferably 40 μm or larger, or more preferably 50 μm or larger (e.g., 60 μm or larger).

The material of the foam substrate is not particularly limited. It is usually preferable to use a foam substrate comprising a layer formed of a plastic foam (a foam of a plastic material). The plastic material (meaning to also encompass rubber materials) for forming the plastic foam is not particularly limited, and can be suitably selected among known plastic materials. One species of plastic material can be used solely, or two or more species can be used in combination.

Specific examples of a plastic foam include polyolefm-based resin foams such as polyethylene foams, polypropylene foams, etc.; polyester-based resin foams such as polyethylene terephthalate foams, polyethylene naphthalate foams, polybutylene terephthalate foams, etc.; polyvinyl chloride-based resin foams such as polyvinyl chloride foams, etc.; vinyl acetate-based resin foams; polyphenylene sulfide resin foams; amide-based resin foams such as polyamide (nylon) resin foams, wholly aromatic polyamide (aramid) resin foams, etc.; polyether ether ketone (PEEK) resin foams; styrene-based resin foams such as polystyrene foams, etc.; urethane-based resin foams such as polyurethane resin foams, etc.; and the like. Alternatively, as the plastic foam, can be used a rubber-based resin foam such as a polychloroprene rubber foam or the like.

Examples of a preferable foam include polyolefin-based resin foams. As the plastic material (i.e., a polyolefin-based resin) constituting the polyolefin-based foam, can be used a known or conventional polyolefin-based resin of various types without any particular limitations. Examples include polyethylenes such as low density polyethylenes (LDPE), linear low density polyethylenes (LLDPE), high density polyethylenes (HDPE), metallocene-catalyst-based linear low density polyethylenes, etc.; polypropylenes; ethylene-propylene copolymers; ethylene-vinyl acetate copolymers; and the like. Among these polyolefin-based resins, can be used one species alone, or two or more species in a suitable combination.

From the standpoint of the impact resistance and the water resistance, particularly preferable examples of the foam substrate in the art disclosed herein include a polyethylene-based foam substrate consisting essentially of a polyethylene-based resin foam, a polypropylene-based foam substrate consisting essentially of a polypropylene-based resin foam, and the like. Herein, the polyethylene-based resin refers to a resin formed from ethylene as the primary monomer (i.e., the primary component among monomers), with the resin encompassing HDPE, LDPE and LLDPE as well as ethylene-propylene copolymers and ethylene-vinyl acetate copolymers each having a copolymerization ratio of ethylene exceeding 50 % by mass, and the like. Similarly, the polypropylene-based resin refers to a resin formed from propylene as the primary monomer. As the foam substrate in the art disclosed herein, can be preferably used a polyethylene-based foam substrate.

Although not particularly limited, in typical, gas bubbles in the foam substrate has an average diameter of preferably 10 $\mu$m to 1000 $\mu$m, or more preferably 20 $\mu$m to 600 $\mu$m. With an average gas bubble diameter of 10 $\mu$m or larger, the impact resistance tends to increase. On the other hand, with an average gas bubble diameter of 1000 $\mu$m or smaller, the water resistance (water shielding ability) tends to increase. The average gas bubble diameter can be measured, for instance, by an optical microscope.

Although not particularly limited, in typical, the foam substrate has a density (an apparent density) of preferably 0.1 g/cm$^3$ to 0.5 g/cm$^3$, or more preferably 0.2 g/cm$^3$ to 0.4 g/cm$^3$. With a density of 0.1 g/cm$^3$ or larger, the strength (e.g., the tensile strength) of the foam substrate (and even the strength of the double-faced PSA sheet) increases, and the impact resistance and the handling properties tend to increase. On the other hand, with a density of 0.5 g/cm$^3$ or smaller, the flexibility is kept at a sufficient level, and the conformability to uneven surfaces tends to increase. With good conformability to uneven surfaces, in general, even when the double-faced PSA sheet is adhered to an adherend having an uneven surface (e.g., a surface having a step), interstices are less likely to be formed in the interface between the PSA sheet and the adherend surface, whereby the water resistance increases. The density (apparent density) of a foam substrate can be measured, for instance, by a method based on JIS K6767.

Although not particularly limited, in typical, the foam substrate has an expansion ratio of preferably 2 cm$^3$/g to 10 cm$^3$/g, or more preferably 2.5 cm$^3$/g to 5 cm$^3$/g. With an expansion ratio of 2 cm$^3$/g or larger, the flexibility increases, and the conformability to uneven surfaces tends to increase. On the other hand, with an expansion ratio of 10 cm$^3$/g or smaller, the strength of the foam substrate (and even the strength of the double-faced PSA sheet) increases, and the impact resistance and the handling properties tend to increase. As used herein, the expansion ratio of a foam substrate is defined as the reciprocal of its apparent density (g/cm$^3$) measured based on JIS K6767.

The elongation of the foam substrate (e.g., a polyolefin-based foam substrate) is not particularly limited. For example, the foam substrate has an elongation of preferably 200 to 800 % (more preferably 400 to 600 %) in the machine direction (MD) and an elongation of preferably 50 to 800 % (more preferably 100 to 600 %) in the tansverse direction (TD). With an elongation equal to or greater than the lower limit cited above, the impact resistance and the conformability to uneven surfaces may increase. On the other hand, with an elongation equal to or less than the upper limit cited above, the strength of the foam substrate increases, and the impact resistance tends to increase. The elongation of a foam substrate is measured based on JIS K6767. The elongation of the foam substrate can be adjusted, for instance, by modifying the degree of crosslinking and the expansion ratio, etc.

The tensile strength of the foam substrate (e.g., a polyolefm-based foam substrate) is not particularly limited. For example, the foam substrate has a tensile strength in the MD of preferably 0.5 MPa to 20 MPa (more preferably 1 MPa to 15 MPa) and a tensile strength in the TD of preferably 0.2 MPa to 20 MPa (more preferably 0.5 MPa to 15 MPa). With MD and TD tensile strengths equal to or higher than the respective lower limits cited above, the handling properties of the foam substrate and the double-faced PSA sheet may increase. On the other hand, with MD and TD tensile strengths equal to or lower than the respective upper limits cited above, the impact resistance and the conformability to uneven surfaces may increase. The tensile strength (MD tensile strength and TD tensile strength) of a foam substrate is measured based on JIS K6767. The tensile strength of the foam substrate can be adjusted, for instance, by modifying the degree of crosslinking and the expansion ratio, etc.

The foam substrate (e.g., a polyolefin-based foam substrate) preferably has a compressive hardness that corresponds to a load of 10 kPa to 300 kPa (more preferably 30 kPa to 200 kPa) required for compressing layers of the foam substrate stacked to an initial thickness of about 25 mm to 25 % of the initial thickness. A compressive hardness of 10 kPa or greater may give rise to greater handling properties. On the other hand, with a compressive hardness of 300 kPa or smaller, the conformability to uneven surfaces may increase. The compressive hardness of a foam substrate is measured based on JIS K6767. The compressive hardness of the foam substrate can be adjusted, for instance, by modifying the degree of crosslinking and the expansion ratio, etc.

The foam substrate may contain various additives as needed such as fillers (inorganic fillers, organic fillers, etc.), anti-aging agent, antioxidant, UV (ultraviolet ray) absorber, anti-static agent, slipping agent, plasticizers, flame retardant, surfactant, and so on.

The foam substrate in the art disclosed herein may be colored in order to develop desirable design or optical properties (e.g., light-blocking ability, light-reflecting ability, etc.) in the double-faced PSA sheet. For coloring the foam substrate, among known organic or inorganic colorants, can be used solely one species, or two or more species in a suitable combination.

For example, when the double-faced PSA sheet disclosed herein is used for a light blocking purpose, although not particularly limited, the foam substrate has a visible light transmittance of preferably 0 to 15 % or more preferably 0 to 10 %, similarly to the visible light transmittance of the double-faced PSA sheet described later. When the double-faced PSA sheet disclosed herein is used for a light reflecting purpose, the foam substrate has a visible light reflectivity of preferably 20 to 100 % or more preferably 25 to 100 %, similarly to the visible light reflectivity of the double-faced PSA sheet described later.

The visible light transmittance of a foam substrate can be determined by irradiating one face of the foam substrate with 550 nm wavelength light using a spectrophotometer (e.g., a spectrophotometer under model number "U-4100" available from Hitachi High-Technologies Corporation) and measuring the intensity of the light transmitted to the other side of the foam substrate. The visible light reflectivity of a foam substrate can be determined by irradiating one face of the foam substrate with 550 nm wavelength light using the spectrophotometer and measuring the intensity of the light reflected by the foam substrate. The visible light transmittance and the visible light reflectivity of a double-faced PSA sheet can be determined by the same methods as well.

When the double-faced PSA sheet disclosed herein is used for a light blocking purpose, it is preferable that the foam substrate is colored black. The black color has a lightness ($L^*$) as specified by the $L^*a^*b^*$ color space of preferably 35 or lower (e.g., 0 to 35), or more preferably 30 or lower (e.g., 0 to 30). The values of $a^*$ and $b^*$ as specified by the $L^*a^*b^*$ color space can be suitably selected according to the value of $L^*$. Neither $a^*$ nor $b^*$ is particularly limited, but it is preferable that each value is in a range of -10 to 10 (more preferably -5 to 5, or even more preferably -2.5 to 2.5). For example, it is preferable that each of $a^*$ and $b^*$ is zero or near zero.

In the present description, he values of $L^*$, $a^*$ and $b^*$ as specified by the $L^*a^*b^*$ color space can be determined through measurements with a colorimeter (e.g., colorimeter under trade name "CR-200" available from Konica Minolta Holdings Inc.). The $L^*a^*b^*$ color space refers to the CIE 1976 ($L^*a^*b^*$) color space defined by the International Commission on Illumination (CIE) in 1976. In Japanese Industrial Standards (JIS), the $L^*a^*b^*$ color space is specified in JIS Z8729.

Examples of a black colorant for coloring the foam substrate black include carbon blacks (furnace black, channel black, acetylene black, thermal black, lamp black, etc.), graphite, copper oxide, manganese(IV) oxide, aniline black, perylene black, titanium black, cyanine black, activated carbon, ferrites (non-magnetic ferrite, magnetic ferrite, etc.), magnetite, chromium oxide, iron oxide, molybdenum disulfide, chromium complexes, composite-oxide-based black colorants, anthraquinone-based organic black colorants, and the like. From the standpoint of the cost and the availability, for example, carbon blacks are preferable as the black colorant. The amount of black colorants is not particularly limited, and they can be used in an amount suitable for producing desirable optical properties.

When the double-faced PSA sheet is used for a light reflecting purpose, it is preferable that the foam substrate is colored white. The white color has a lightness ($L^*$) of preferably 87 or higher (e.g., 87 to 100), or more preferably 90 or higher (e.g., 90 to 100). The values of $a^*$ and $b^*$ as specified by the $L^*a^*b^*$ color space can be suitably selected according to the value of $L^*$. It is preferable that each of $a^*$ and $b^*$ is in a range of -10 to 10 (more preferably -5 to 5, or even more preferably -2.5 to 2.5). For example, it is preferable that each of $a^*$ and $b^*$ is zero or near zero.

Examples of a white colorant include inorganic white colorants such as titanium oxides (e.g., titanium dioxides such as rutile titanium dioxide, anatase titanium dioxide, etc.), zinc oxide, aluminum oxide, silicon oxide, zirconium oxide, magnesium oxide, calcium oxide, tin oxide, barium oxide, cesium oxide, yttrium oxide, magnesium carbonate, calcium carbonates (light calcium carbonate, heavy calcium carbonate, etc.), barium carbonate, zinc carbonate, aluminum hydroxide, calcium hydroxide, magnesium hydroxide, zinc hydroxide, aluminum silicate, magnesium silicate, calcium silicate, barium sulfate, calcium sulfate, barium stearate, zinc oxide, zinc sulfide, talc, silica, alumina, clay, kaolin, titanium phosphate, mica, gypsum, white carbon, diatomaceous earth, bentonite, lithopone, zeolite, sericite, hydrated halloysite, etc.; organic white colorants such as acrylic resin particles, styrene-based resin particles, urethane-based resin particles, amide-based resin particles, polycarbonate-based resin particles, silicone-based resin particles, urea-formaldehyde-based resin particles, melamine resin particles, etc.; and the like. The amount of white colorants is not particularly limited, and they can be used in an amount suitable for producing desirable optical properties.

The surface of the foam substrate may be pre-subjected to a suitable surface treatment as necessary. The surface treatment may be a chemical or a physical process to increase the adhesion between itself and its adjacent material (e.g., a PSA layer). Examples of such a surface treatment include corona discharge, chromic acid treatment, exposure to ozone, exposure to flame, UV irradiation, plasma treatment, primer application, and the like.

<Double-faced PSA sheet>

The double-faced PSA sheet disclosed herein comprises such a foam substrate as well as a first PSA layer and a second PSA layer. At least one of the first PSA layer and the second PSA layer is constituted with the rubber-based PSA. The other PSA layer may be constituted with the said rubber-based PSA also or with a different PSA. The different PSA may comprise a base polymer of various types, with examples including acrylic, polyester-based, urethane-based, polyether-based, silicone-based, polyamide-based, fluorine-based polymers and the like. Alternatively, it may be a rubber-based PSA (e.g., a natural rubber-based PSA, a polyisobutylene-based PSA, etc.) comprising a base polymer that is not a block copolymer of a mono-vinyl-substituted aromatic compound and a conjugated diene compound.

In a preferable embodiment, each of the first PSA layer and the second PSA layers is constituted with a rubber-based PSA comprising as a base polymer a block copolymer of a mono-vinyl-substituted aromatic compound and a conjugated diene compound. The rubber-based PSA constituting the first PSA layer and the rubber-based PSA constituting the second PSA layer may be the same or different. From the standpoint of the productivity and the cost, etc., in a preferable double-faced PSA sheet, the first PSA layer and the second PSA layer are formed from rubber-based PSAs having the same composition.

The PSA layer typically comprises a PSA (adhesive components) as described above and is formed with a composition (PSA composition) that is present as a liquid at room temperature or at least turns into a liquid when heated. For instance, it may be a solvent-based PSA composition containing adhesive components in an organic solvent, a water-dispersed (typically an aqueous emulsion-based) PSA composition in which adhesive components are dispersed in an aqueous solvent, a hot-melt PSA composition, or the like. From the standpoint of the PSA's applicability and the latitude in the choice of a foam substrate, etc., a solvent-based or a water-dispersed PSA composition can be used preferably. For obtaining even greater adhesive properties, a solvent-based PSA composition is usually more advantageous.

As a method for forming a PSA layer on a foam substrate, any of various heretofore known methods can be applied. Examples include a direct method where the PSA composition is directly applied to a foam substrate, a transfer method where the PSA composition is applied on a suitable release surface to form a PSA layer on the release surface and the resulting PSA layer is adhered and transferred to a foam substrate, and other methods. These methods can be used in combination. When a solvent-containing PSA composition is used, from the standpoint of facilitating the crosslinking reaction and increasing the production efficiency, etc., the PSA composition is dried preferably with heating.

The combined thickness of the two PSA layers (the total thickness of the two PSA layers on both sides of the substrate) is not particularly limited as far as the double-faced PSA sheet has an overall thickness not exceeding 400 $\mu$m. For instance, the combined thickness of the two PSA layers can be 10 $\mu$m to 200 $\mu$m. From the standpoint of the adhesive properties, in usual, the two PSA layers have a combined thickness of suitably 20 $\mu$m or larger, preferably 30 $\mu$m or larger, or more preferably 40 $\mu$m or larger. From the standpoint of ensuring to obtain a foam substrate thickness capable of producing desirable properties, in usual, the two PSA layers have a combined thickness of suitably 170 $\mu$m or smaller, preferably 150 $\mu$m or smaller, or more preferably 100 $\mu$m or smaller (e.g., 80 $\mu$m or smaller). The thickness of the first PSA layer and the thickness of the second PSA layer may be the same or different. It is usually preferable to employ a constitution where the two PSA layers have about the same thickness. When the two PSA layers are formed from the rubber-based PSA (i.e., a rubber-based PSA comprising as a base polymer a block copolymer of a mono-vinyl-substituted aromatic compound and a conjugated diene compound), each PSA layer may have a thickness of, for instance, 5 $\mu$m to 100 $\mu$m, preferably 10 $\mu$m to 75 $\mu$m, or mor preferably 15 $\mu$m to 65 $\mu$m (e.g., 20 $\mu$m to 40 $\mu$m). Each PSA layer may consist of a single layer or multiple sub-layers.

The double-faced PSA sheet disclosed herein may further comprise other layer(s) (an intermediate layer, a undercoat layer, etc., which may be referred to as "optional layer(s)") besides the foam substrate and the two PSA layers as far as the effects of the present invention are not significantly interfered. For example, the optional layer(s) may be present between the foam substrate and one or each of the two PSA layers. In a double-faced PSA sheet having such a constitution, the thickness of the optional layer(s) is included in the overall thickness of the double-faced PSA sheet (i.e., the thickness from one PSA layer surface to the other PSA layer surface).

A preferable embodiment of the art disclosed herein provides a double-faced PSA sheet that exhibits a push-off debonding strength of 40 N/cm$^2$ or greater (more preferably 50 N/cm$^2$ or greater, e.g., 55 N/cm$^2$ or greater). A double-faced PSA sheet exhibiting such a high push-off debonding strength is preferable because it provides a dependable adhesion such that when components are attached to each other via the double-faced PSA sheet, they are less likely to be separated by internal stress.

The push-off debonding strength of a double-faced PSA sheet is defined as the maximum stress observed during a process of separating a glass plate and a polycarbonate plate bonded to each other via the double-faced PSA sheet having a frame shape that has an outer width of 53 mm, an outer length of 116 mm and a border width (width of the name border) of 1 mm. In the separation process, the glass plate of a test sample is pushed into its thickness direction from the inside (the side of the interface between the two plates) toward the outside at a speed of 10 mm/min. The test sample is prepared by pressure-bonding the polycarbonate plate to the glass plate via the double-faced PSA sheet with a 5 kg roller moved back and forth once. The push-off debonding strength can be measured, for instance, according to the procedures described later in the worked examples.

According to another preferable embodiment of the art disclosed herein, can be obtained a double-faced PSA sheet that exhibits a repulsion resistance to a level where in the repulsion resistance test carried out by the method described later in the worked examples, no floating is observed at either edge of a test piece thereof when tested after stored at room temperature for 24 hours and also after stored at 70 °C for 24 hours.

According to another preferable embodiment of the art disclosed herein, can be obtained a double-faced PSA sheet that exhibits a peel property under a constant load to a level where in the constant-load peel property test carried out by the method described later in the worked examples, it results in no debonding (no separation) for 7 days or longer (more preferably 10 days or longer) when stored under a load of 200 g in an environment at 70 °C.

The double-faced PSA sheet disclosed herein may exhibit desirable optical properties (transmittance, reflectivity, etc.). For instance, when used for a light blocking purpose, the double-faced PSA sheet has a visible light transmittance of preferably 0 to 15 % (more preferably 0 to 10 %). When used for a light reflecting purpose, the double-faced PSA sheet has a visible light reflectivity of preferably 20 to 100 % (more preferably 25 to 100 %). The optical properties of the double-faced PSA sheet can be adjusted by, for instance, coloring the foam substrate as described above or by like methods.

From the standpoint of preventing corrosion of metal, etc., the double-faced PSA sheet disclosed herein is preferably free of halogens. Absence of halogens in the double-faced PSA sheet can be advantageous, for example, when the double-faced PSA sheet is used for fastening electric/electronic components. It is also preferable from the standpoint of reducing environmental stress since the generation of halogen-containing gas during incineration can be suppressed. A halogen-free double-faced PSA sheet can be produced by employing a single means or a few means together among means such as avoiding deliberate inclusion of a halogen compound into the raw materials for forming the foam substrate or the PSA, using a foam substrate formed without deliberate inclusion of a halogen compound, avoiding additives derived from halogen compounds when any additives are used, and other like means.

Although not particularly limited, the double-faced PSA sheet disclosed herein can be applied to an adherend formed from, for instance, a metal material such as stainless steel (SUS), aluminum, etc.; an inorganic material such as glass, ceramics, etc.; a resin material such as polycarbonate, polymethyl methacrylate (PMMA), polypropylene, polyethylene terephthalate (PET), etc.; a rubber material such as natural rubber, a butyl rubber, etc.; a composite material of these; or the like.

The double-faced PSA sheet disclosed herein may exhibit excellent impact resistance and conformability to uneven surfaces because it comprises a foam substrate, and it may also exhibit excellent repulsion resistance for a relatively small overall thickness. Thus, taking advantage of these characteristics, it can be preferably applied to purposes involving electronic devices, for instance, for fastening a glass screen or a key module in a mobile phone, for absorbing impact forces applied to an electronic device, for fastening a decorative TV panel, for protecting a PC battery pack, for waterproofing a digital camcorder lens, and for like purposes. It can be particularly preferably used for mobile electronic devices, especially those (e.g., mobile phones, smartphones, etc.) having liquid crystal displays. For instance, in these mobile electronic devices, it can be used particularly preferably for attaching display panels to their cases.

Several worked examples relating to the present invention are described below, but the present invention is not intended to be limited to these examples. In the description below, "parts" and "%" are based on the mass unless otherwise specified. The physical properties in the description below were measured or evaluated as follows.

(1) 180° Peel strength

To a first adhesive face of each double- faced PSA sheet, a 25 $\mu$m thick PET film was adhered. This was cut into 20 mm wide by 100 mm long pieces to prepare test specimens.

In an environment at 23 °C and 50 % RH, the second adhesive face of each specimen was exposed and pressure-bonded to an adherend surface with a 2 kg roller moved back and forth once. The resultant was left in the same environment for 30 minutes, and based on JIS Z 0237, using a universal tensile and compression tester (product name "Tensile and Compression Testing Machine, TG- 1kN" available from Minebea Co., Ltd.) , the peel strength (N/ 20mm-width) was measured at a tensile speed of 300 mm/min and a peel angle of 180°.

With respect to five different adherends, namely, a stainless steel plate (SUS304BA plate) , a polycarbonate plate (PC plate) , a polymethyl methacrylate plate (PMMA plate) , a glass plate and a polypropylene resin plate (PP plate) , the 180° peel strength (adhesive strength) was measured according to the procedures described above.

(2) Push-off debonding strength

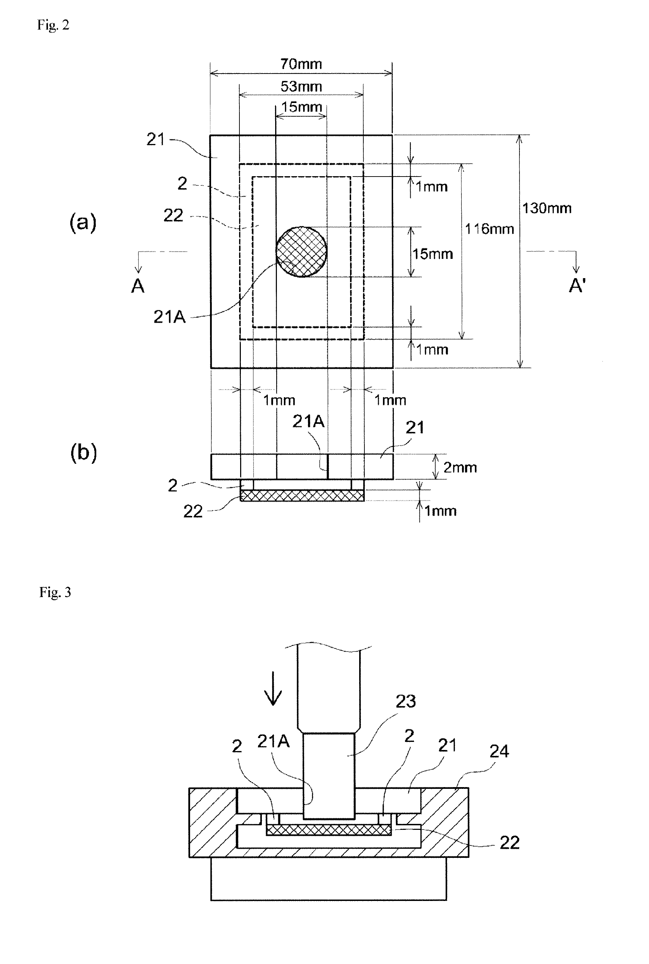

Each double-faced PSA sheet was cut into a frame shape having an outer width of 53 mm, an outer length of 116 mm and a border width of 1 mm as shown in Figs. 2(a) and 2(b) to obtain a frame-shaped double-faced PSA sheet. Via the frame-shaped double-faced PSA sheet, a 1 mm thick by 53 mm wide by 116 mm long glass plate (Gorilla® glass available from Coming Inc., was used here and hereinafter) and a PC plate (2 mm thick by 70 mm wide by 130 mm long) having a center through-hole of 15 mm diameter were pressure-bonded to each other with a 5 kg roller moved back and forth once to obtain a test sample.

Figs. 2(a) and 2(b) show outline drawings of the test sample, with Fig. 2(a) showing a top view and Fig. 2(b) showing a cross-sectional view taken across line A-A' in Fig. 2(a). In Figs. 2(a) and 2(b), numeral 21 denotes the PC plate, numeral 2 denotes the frame-shaped double-faced PSA sheet, numeral 22 denotes the glass plate, and numeral 21A denotes the through-hole provided in PC plate 21.

Each test sample was set in the universal tensile and compression tester. A round bar was allowed to pass through the through-hole of the PC plate and was lowered at a speed of 10 mm/min to push the glass plate in the direction of the glass plate being pulled away from the PC plate (i.e., downward). The maximum stress observed over a time period until the glass plate was separated from the PC plate was recorded as the push-off debonding strength. The measurement was carried out in an environment at 23 °C and 50 % RH.

Fig. 3 shows a schematic cross-sectional view illustrating the method for measuring the push-off debonding strength. Numeral 21 denotes the PC plate, numeral 2 denotes the frame-shaped double-faced PSA sheet, numeral 22 denotes the glass plate, numeral 23 denotes the round bar, and numeral 24 denotes a support. As shown in Fig. 3, a test sample was set on support 24 of the tensile and compression tester, and glass plate 22 was pushed by round bar 23 passed through through-hole 21 A. During the push-off debonding strength measurements, the load exerted by the pushing force applied to glass plate 22 by round bar 23 did not cause PC plate 21 to warp or break.

(3) Impact resistance

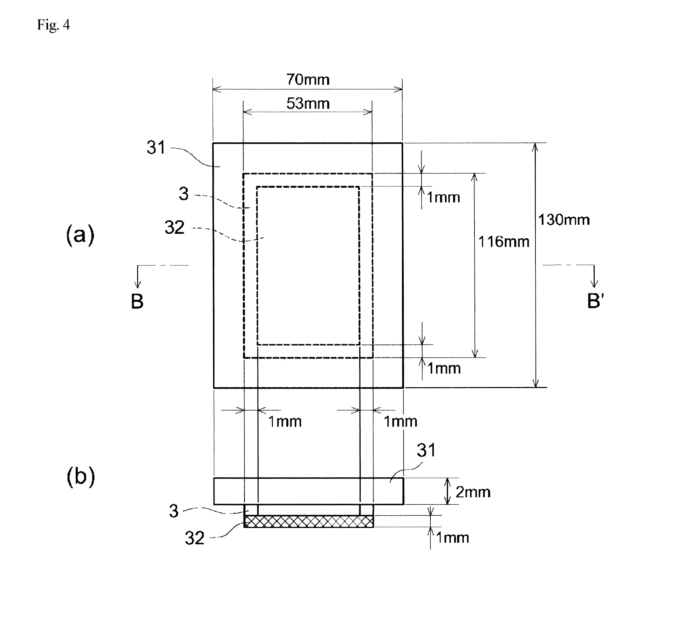

Each double- faced PSA sheet was cut into a frame shape having an outer width of 53 mm, an outer length of 116 mm and a border width of 1 mm as shown in Figs. 4 (a) and 4 (b) to obtain a frame- shaped double- faced PSA sheet. Via the frame- shaped double- faced PSA sheet, a PC plate (2 mm thick by 70 mm wide by 130 mm long) and a glass plate (1 mm thick by 53 mm wide by 116 mm long, 18 g of mass) were pressure- bonded to each other with a 5 kg roller moved back and forth once to obtain a test sample (see Figs. 4 (a) and 4 (b) ) .

Figs. 4 (a) and 4 (b) show outline drawings of the test sample, with Fig. 4 (a) showing a top view and Fig. 4 (b) showing a cross- sectional view taken across line B- B' in Fig. 4 (a) . In Figs. 4 (a) and 4 (b) , numeral 31 denotes the PC plate, numeral 3 denotes the frame- shaped double- faced PSA sheet, and numeral 32 denotes the glass plate.

A 110 g weight was attached to the back face (opposite to the face bonded to the glass plate) of the PC plate in each test sample. The test sample with the attached weight was subjected to a drop test in which the test sample was allowed to fall freely from a height of 1.2 m to a concrete board at room temperature (around 23 °C) for 60 times. For each of the 60 times, the spatial orientation of the test sample was changed so that the underside was alternated among six faces. That is, the test sample was subjected to 10 free fall rounds with respect to each of six different initial spatial orientations.

After each round, the interface between the PC plate and the glass plate was visually inspected for the presence of any peeling, and the drop impact resistance at room temperature was evaluated by the number of free fall rounds completed without any peeling. When no peeling occurred even after the 60th round, it was recorded as "≥ 60 rounds".

(4) Water resistance

Each double-faced PSA sheet was cut into a frame shape having an outer width of 53 mm, an outer length of 116 mm and a border width of 1 mm to obtain a frame-shaped double-faced PSA sheet. The frame-shaped double-faced PSA sheet was adhered around the perimeter of a 1mm thick by 53 mm wide by 116 mm long acrylic plate to prepare an acrylic plate with a frame-shaped double-faced PSA sheet.

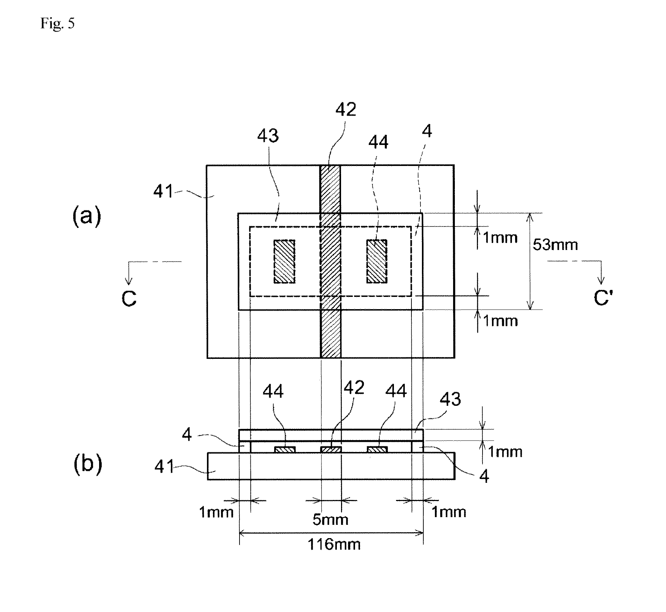

As shown in Figs. 5(a) and 5(b), 5 mm wide tape 42 was adhered to the surface of PC plate 41 to form a land (step). Tape 42 was used to provide the PC plate with an uneven surface. Herein, as tape 42, was used a PSA sheet comprising a film substrate and a PSA layer provided thereon. To confirm the occurrence of water intrusion easily, strips of non-woven fabric 44 were placed next to both sides of tape 42, respectively. The acrylic plate with the frame-shaped double-faced PSA sheet was positioned on top of the PC plate 41 to cover non-woven fabric 44 with the center of each length of frame-shaped double-faced PSA sheet 4 crossing the width of tape 42, and pressure-bonded thereto with a 5 kg roller moved backed and forth once.

As for tape 42, were used four different tapes having thicknesses (total thickness of the film substrate and the PSA layers combined) of 10 $\mu$m, 30 $\mu$m, 50 $\mu$m and 70 $\mu$m, respectively. Four acrylic plates with each having a frame-shaped double-faced PSA sheet were adhered to PC plates 41 to enclose uneven interfaces having lands (steps) at heights corresponding to the thicknesses of the respective tapes 42 to prepare a total of four different test samples, respectively. In the same manner as described above except that no tape was used, a test sample with a smooth interface was prepared. Figs. 5(a) and 5(b) show outline drawings of the test sample used for testing the water resistance, with Fig. 5(a) showing a top view and Fig. 5(b) showing a cross-sectional view taken across line C-C' in Fig. 5(a). In Figs. 5(a) and 5(b), numeral 41 denotes the PC plate, numeral 42 denotes the tape used for forming a land (step), numeral 4 denotes the frame-shaped double-faced PSA sheet, numeral 43 denotes the acrylic plate, and numeral 44 denotes the non-woven fabric. The water resistance test was carried out based on IPX7 standards (JIS C0920/IEC60529), by keeping each test sample immersed in a 1 m deep water pool for 30 minutes under a standard condition (23 °C, 50 % RH) and observing the occurrence of water intrusion in the interface.

The water resistance test was conducted after each test sample was aged under a standard condition (temperature: 23 °C, humidity: 50 %) for 30 minutes. With respect to each land height, eight different test samples were prepared for the test (i.e., n = 8).

When no water intrusion was observed for all 8 test samples with smooth interfaces, the water resistance was graded as "Good". With respect to test samples with uneven interfaces, among the four different land heights, the largest land height with which all 8 test samples resulted in no water intrusion was recorded as the "allowable unevenness". It can be said that with a larger allowable unevenness, more highly water-resistant adhesion is provided across an uneven interface. The results of the water resistance test across uneven interfaces can also be used to assess the conformability of the double-faced PSA sheet to uneven surfaces.

(5) Repulsion resistance

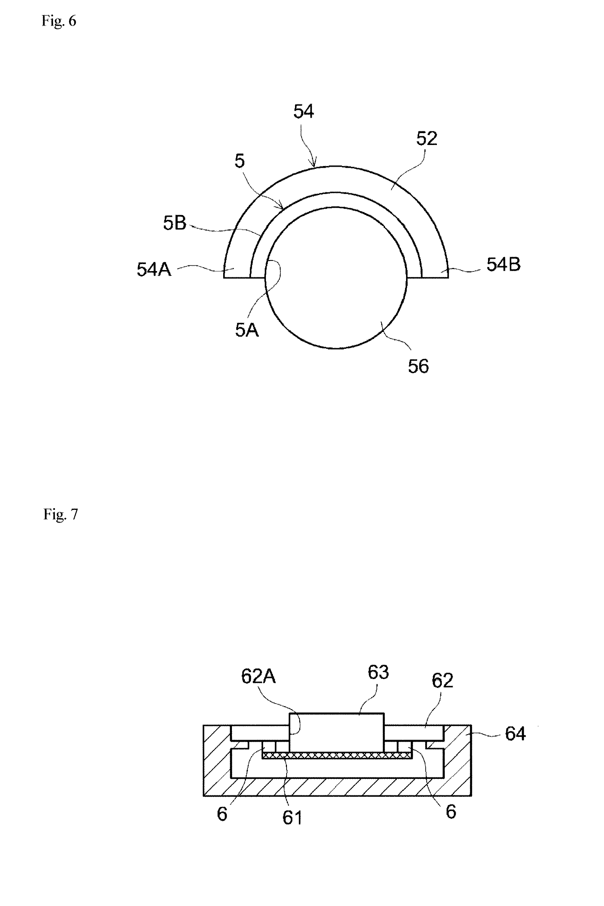

Using a stainless steel cylinder of 30 mm diameter as an adherend, the repulsion resistance of each double-faced PSA sheet was evaluated. In particular, as shown in Fig. 6, to first adhesive face 5A of double-faced PSA sheet 5, 400 $\mu$m thick polycarbonate film 52 was adhered for backing, and the resulting backed PSA sheet 5 was cut into a 10 mm wide by 50 mm long strip to prepare test piece 54. In an environment at 23 °C and 50 % RH, as shown in Fig. 6, second adhesive face 5B of test piece 54 was pressure-bonded to adherend (stainless steel cylinder) 56 with a 2 kg roller moved back and forth once, with the length direction of test piece 54 wrapping around the circumference of the cylinder. It is noted that adherend 56 had been cleaned with ethanol in advance. After the resultant was stored either (A) at room temperature (23 °C, 50 % RH) for 24 hours or (B) in an environment at 70 °C for 24 hours, test piece 54 was visually inspected to see if two edges 54A and 54B of the length direction of test piece 54 peeled off from the surface of adherend 56. When any peeling was found, the floated length (the length of a segment in test piece 54 that floated off from the surface of adherend 56) was measured. When both edges of the test piece floated off, the average value of the floated lengths of the two edges was determined as the floated length of the test piece. When no floating was observed at either edge, it was recorded as "No floating".

(6) Peel property under a constant load

Each double-faced PSA sheet was cut into a frame shape having an outer width of 53 mm, an outer length of 116 mm and a border width of 1 mm to obtain a frame-shaped double-faced PSA sheet. As shown in Fig. 7, via the frame-shaped double-faced PSA sheet 6, a 1 mm thick by 53 mm wide by 116 mm long glass plate (glass screen) 61 and PC plate 62 (5 mm thick by 70 mm wide by 130 mm long) having a center through-hole 62A were pressure-bonded to each other with a 5 kg roller moved back and forth once to obtain a test sample. The test sample was set on support 64. While supporting the outerperiphery of PC plate 62, weight 63 having a prescribed mass was allowed to pass through through-hole 62A and was placed on top of glass plate 61. This was stored in an environment at 70 °C, and the number of days until glass plate 61 was separated from PC plate 62 was counted. With three standard weights having masses of 90 g, 120 g and 200 g, respectively, the peel property was evaluated by the method described above.

<Example 1>

(Sample S1)

100 parts of a styrene-isoprene block copolymer (product name "QUINTAC 3 520" available from Nippon Zeon Corporation; 78 % diblock fraction, 15 % styrene content), 40 parts of a terpene-phenol resin, 30 parts of a terpene resin, and 0.75 part (based on the solid content) of an isocyanate compound (product name "CORONATE L" available from Nippon Polyurethane Kogyo Co., Ltd.) were mixed in toluene as a solvent, and the resulting mixture was stirred to prepare a PSA composition A1 with 50 % NV. As the terpene-phenol resin, two species, namely, product name "YS POLYSTAR S 145" (softening point 145 °C, hydroxyl value 100 mgKOH/g) available from Yasuhara Chemical Co., Ltd., and product name "YS POLYSTAR T145" (softening point 145 °C, hydroxyl value 60 mgKOH/g) available from Yasuhara Chemical Co., Ltd., were used at a mass ratio of 1:1 in a combined amount of 40 parts. As for the terpene resin, was used product name "YS RESIN PX1150N" (softening point 115 °C, hydroxyl value < 1 mgKOH/g) available from Yasuhara Chemical Co., Ltd.

The PSA composition A1 was applied to a first face of a commercially available release liner (trade name "SLB-80W3D" available from Sumikakakoushi Co., Ltd.) and allowed to dry at 100 °C for 2 minutes to form a PSA layer having a thickness of 25 $\mu$m after dried. Subsequently, the PSA layer was adhered to one face of a polyethylene resin foam sheet (or "substrate No.1" hereinafter) as a foam substrate to obtain a single-faced PSA sheet. The substrate No. 1 had a thickness of 150 $\mu$m, a tensile strength in the length direction (MD tensile strength) of 12.0 MPa, and a tensile strength in the width direction (TD tensile strength) of 10.0 MPa.

Subsequently, the PSA composition A1 was applied to a first face of another release liner of the same kind as above and allowed to dry at 100 °C for 2 minutes to form a PSA layer having a thickness of 25 $\mu$m after dried. This PSA layer was adhered to the other face of the foam substrate in the single-faced PSA sheet. The resulting structure was allowed to pass through a laminator at 80 °C (0.3 MPa, speed 0.5 m/min) once and then was cured in an oven at 50 °C for one day. Thus was obtained a double-faced PSA sheet sample S1 protected by two release liners that had a constitution formed with a first release liner, a first PSA layer, a foam substrate, a second PSA layer and a second release liner overlaid in this order (or a "release liner/PSA layer/substrate/PSA layer/release liner" structure hereinafter) and had an overall thickness of 200 $\mu$m.

(Sample S2)

To a reaction vessel equipped with a condenser, a nitrogen inlet, a thermometer, an addition funnel and a stirrer, were added 69 parts of toluene and 163 parts of ethyl acetate as solvents as well as 80 parts of butyl acrylate, 20 parts of 2-ethylhexyl acrylate, 3 parts of acrylic acid, 5 parts of vinyl acetate, 0.1 part of 2-hydroxyethyl acrylate and 0.2 part of 2,2-azobisisobutylonitrile as an initiator. The resulting mixture was stirred, and polymerization was carried out at 60 °C under a nitrogen flow for 6 hours to obtain an acrylic polymer solution. To this solution, relative to 100 parts of polymers in the solution, were added 30 parts of a polymerized rosin ester resin and 1.5 parts of an isocyanate compound (trade name "CORONATE L") based on the solid content to prepare an acrylic PSA composition A2.

As the foam substrate, was used a 100 $\mu$m thick polyethylene resin foam sheet (substrate No. 2). The substrate No. 2 had a MD tensile strength of 9.5 MPa and a TD tensile strength of 8.7 MPa.

In the same manner as the preparation of sample S1 except that the PSA composition A2 was used in place of the PSA composition A1, that the substrate No. 2 was used in place of the substrate No. 1, and that PSA layers each having a thickness of 50 $\mu$m after dried were adhered to one face and the other face of the substrate No. 2, was obtained a double-faced PSA sheet sample S2 that had a release liner/PSA layer/substrate/PSA layer/release liner structure and an overall thickness of 200 $\mu$m.

(Sample S3)

As the foam substrate, was used a 150 $\mu$m thick polyethylene resin foam substrate (substrate No. 3). The substrate No. 3 had a MD tensile strength of 11.0 MPa and a TD tensile strength of 9.5 MPa. In the same manner as the preparation of sample S2 except that the substrate No. 3 was used in place of the substrate No. 2, and that PSA layers each having a thickness of 25 $\mu$m after dried were adhered to one face and the other face of the substrate No. 3, was obtained a double-faced PSA sheet sample S3 that had a release liner/PSA layer/substrate/PSA layer/release liner structure and an overall thickness of 200 $\mu$m.

Table 1 shows the overall thicknesses of the double-faced PSA sheet samples S1 to S3 and the results of the evaluation tests performed by the methods described above. In Table 1, symbol # following a peel strength value means that the foam substrate was damaged.

[Table 1]

Table 1

| Sample | S1 | S2 | S3 |
|---|---|---|---|
| Overall thickness ($\mu$m) | 200 | 200 | 200 |

(continued)

| Sample | | S1 | S2 | S3 |
|---|---|---|---|---|
| Peel strength (N/20mm) | SUS304BA plate | 35.0# | 19.0# | 17.0 |
| | PC plate | 36.0# | 20.0# | 17.5 |
| | PMMA plate | 36.0# | 20.0# | 18.0 |
| | Glass plate | 36.0# | 18.5# | 18.0 |
| | PP plate | 23.0 | 17.0 | 14.5 |
| Push-off debonding strength (N/cm$^2$) | | 57.6 | 43.0 | 53.2 |
| Impact resistance | | $\geq$ 60 rounds | $\geq$ 60 rounds | $\geq$ 60 rounds |
| Water resistance | Even interface | Good | Good | Good |
| | Allowable unevennes s | 50 $\mu$m | 50 $\mu$m | 50 $\mu$m |
| Repulsion resistance (mm) | After 24 h @ RT | No floating | 1.0 mm | 0.5 mm |
| | After 24 h @ 70 °C | No floating | 5.0 mm | 3.0 mm |
| Peel property under a constant load | Load 90g | $\geq$ 10 days | 6 days | $\geq$ 10 days |
| | Load 120g | $\geq$ 10 days | 3 days | $\geq$ 10 days |
| | Load 200g | $\geq$ 10 days | 1 day | 7 days |

With having an overall thickness of 200 $\mu$m and comprising a foam substrate as well as a PSA layer that comprised as a base polymer a block copolymer of a mono-vinyl-substituted aromatic compound and a conjugated diene compound on each of the first and second faces of the foam substrate, the double-faced PSA sheet sample S1 exhibited significantly superior repulsion resistance to samples S2 and S3 each having both PSA layers constituted with an acrylic PSA. This sample S1 exhibited excellent peel property under a constant load as well as a good push-off debonding strength. Furthermore, it exhibited a high peel strength to a polypropylene plate and was anchored suitably to the polyolefin-based foam substrate. The impact resistance and other properties were also comparative to or even greater than those of Samples S2 and S3.

Although specific embodiments of the present invention have been described in detail above, these are merely for illustrations and do not limit the scope of the claims. The art according to the claims includes various modifications and changes made to the specific embodiments illustrated above.

## Claims

1. A double-faced pressure-sensitive adhesive sheet comprising
   a foam substrate,
   a first pressure-sensitive adhesive layer provided on a first face of the foam substrate, and
   a second pressure-sensitive adhesive layer provided on a second face of the foam substrate, wherein at least one of the first pressure-sensitive adhesive layer and the second pressure-sensitive adhesive layer is constituted with a rubber-based pressure-sensitive adhesive comprising, as a base polymer, a block copolymer of a mono-vinyl-substituted aromatic compound and a conjugated diene compound, and
   the sheet has an overall thickness of 400 $\mu$m or smaller.

2. The double-faced pressure-sensitive adhesive sheet according to Claim 1, wherein the foam substrate has a thickness of 60 $\mu$m or larger, but 300 $\mu$m or smaller.

3. The double-faced pressure-sensitive adhesive sheet according to Claim 1 or 2, wherein the rubber-based pressure-sensitive adhesive comprises a tackifier resin, with the tackifier resin comprising a low softening point resin having a softening point below 120 °C and a high softening point resin having a softening point of 120 °C or above, with the high softening point resin comprising a terpene-phenol resin.

4. The doublo-faced pressure-sensitive adhesive sheet according to any one of Claims 1 to 3, wherein the rubber-based pressure-sensitive adhesive comprises a tackifier resin having a hydroxyl value of 80 mgKOH/g or higher.

Fig. 1

Fig. 2

(a)

(b)

Fig. 3

Fig. 4

(a)

70mm

53mm

31

3

32

1mm

116mm

130mm

1mm

B

B'

1mm

1mm

(b)

31

2mm

3

32

1mm

Fig. 5

Fig. 6

54

52

5

5B

54A

5A

54B

56

Fig. 7

62A

63

62

64

6

61

6

Europäisches
Patentamt

European
Patent Office

Office européen
des brevets

## EUROPEAN SEARCH REPORT

Application Number

EP 13 15 9391

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/098376 A1 (FUKUOKA YOSHIYUKI [JP]) 16 April 2009 (2009-04-16) * paragraphs [0010] - [0012], [0015], [0031], [0032]; claims; examples * | 1-4 | INV. C09J153/02 C08J5/18 C09J7/02 |
| X | WO 2005/059055 A2 (3M INNOVATIVE PROPERTIES CO [US]; SAKURAI AIZO [JP]; MIZUNO EIJI [JP]) 30 June 2005 (2005-06-30) * page 6, line 1 - line 8 * * figures 1,4 * * page 13, line 23 - line 27 * * page 16, line 8 - page 17, line 20 * * page 25, line 14 - page 26, line 12 * * page 30, line 9 - line 18; claims; examples 1,2 * | 1-4 | |
| A | US 2011/306677 A1 (KATAOKA HIROSHI [JP]) 15 December 2011 (2011-12-15) * the whole document * | 1-4 | |
| A | EP 1 676 895 A1 (HISAMITSU PHARMACEUTICAL CO [JP]) 5 July 2006 (2006-07-05) * the whole document * | 1-4 | TECHNICAL FIELDS SEARCHED (IPC) |
| A | EP 1 347 028 A2 (TESA AG [DE]) 24 September 2003 (2003-09-24) * the whole document * | 1-4 | C08J C09J |

The present search report has been drawn up for all claims

| Place of search | Date of completion of the search | Examiner |
|---|---|---|
| Munich | 20 June 2013 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 9391

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2013

| Patent document cited in search report | | Publication date | Patent family member(s) | | Publication date |
|---|---|---|---|---|---|
| US 2009098376 | A1 | 16-04-2009 | JP | 5134533 B2 | 30-01-2013 |
| | | | US | 2009098376 A1 | 16-04-2009 |
| | | | WO | 2007132881 A1 | 22-11-2007 |
| WO 2005059055 | A2 | 30-06-2005 | EP | 1692240 A2 | 23-08-2006 |
| | | | US | 2007077418 A1 | 05-04-2007 |
| | | | WO | 2005059055 A2 | 30-06-2005 |
| US 2011306677 | A1 | 15-12-2011 | CA | 2753052 A1 | 26-08-2010 |
| | | | US | 2011306677 A1 | 15-12-2011 |
| | | | WO | 2010095578 A1 | 26-08-2010 |
| EP 1676895 | A1 | 05-07-2006 | BR | PI0415652 A | 19-12-2006 |
| | | | EP | 1676895 A1 | 05-07-2006 |
| | | | JP | 4593471 B2 | 08-12-2010 |
| | | | KR | 20060094963 A | 30-08-2006 |
| | | | TW | I335226 B | 01-01-2011 |
| | | | US | 2007077282 A1 | 05-04-2007 |
| | | | WO | 2005037946 A1 | 28-04-2005 |
| EP 1347028 | A2 | 24-09-2003 | DE | 10212049 A1 | 02-10-2003 |
| | | | EP | 1347028 A2 | 24-09-2003 |
| | | | ES | 2261804 T3 | 16-11-2006 |
| | | | JP | 2003321662 A | 14-11-2003 |
| | | | US | 2003215660 A1 | 20-11-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012060664 A
- JP 2012060665 A
- JP 2012177534 A
- JP 2012017753 A
- JP 2012200907 A
- JP 2010155969 A

**Non-patent literature cited in the description**

- **C. A. DAHLQUIST.** Adhesion : Fundamental and Practice. McLaren & Sons, 1966, 143